# EUROPÄISCHE PATENTSCHRIFT

(11) **EP 3 288 161 B1**
(45) Veröffentlichungstag und Bekanntmachung des Hinweises auf die Patenterteilung: **26.04.2023**
(21) Anmeldenummer: 16001851.1
(22) Anmeldetag: 23.08.2016
(51) Int. Cl.: H02K 29/08, H02K 1/276, H02K 11/215

(54) **ELEKTRONISCH KOMMUTIERTER MOTOR MIT ZWEI VERSCHIEDENEN ROTORKERNEN**
ELECTRONICALLY COMMUTATED MOTOR WITH TWO DIFFERENT ROTOR CORES
MOTEUR A COMMUTATION ELECTRONIQUE COMPRENANT DEUX CULASSES DE ROTOR DIFFERANTS

(43) Veröffentlichungstag der Anmeldung: 28.02.2018
(73) Patentinhaber: maxon international ag, 6072 Sachseln (CH)
(72) Erfinder: Imfeld, Stefan, 6074 Giswil (CH)
(74) Vertreter: Grünecker Patent- und Rechtsanwälte PartG mbB

(56) Entgegenhaltungen:
- EP-A1- 1 670 121
- JP-A- 2001 186 744
- US-A- 5 325 005
- US-A1- 2015 318 747

## Beschreibung

Die vorliegende Erfindung betrifft einen elektronisch kommutierten Elektromotor nach dem Oberbegriff des unabhängigen Anspruchs 1.

Ein gattungsgemäßer elektronisch kommutierter Elektromotor weist einen Stator, einen gegenüber dem Stator drehbar gelagerten Rotor, und zumindest einen Sensor zur Abtastung eines mit dem Rotor mitdrehenden Magnetfelds auf. Der Sensor liefert das Signal für die Kommutierungselektronik. Der Stator weist eine Statorwicklung und einen weichmagnetischen Statorkern auf. Der Rotor umfasst mehrere in Umfangsrichtung des Rotors verteilt angeordnete Permanentmagneten sowie einen ersten weichmagnetischen Rotorkern für die Permanentmagneten. Das Rotormagnetfeld, das zum Betrieb des Elektromotors mit einem durch Statorwicklung und Statorkern erzeugten Statormagnetfeld des Stators zusammenwirkt, wird durch die Permanentmagneten und den ersten weichmagnetischen Rotorkern erzeugt.

Derartige elektronisch kommutierte Elektromotoren sind aus dem Stand der Technik bekannt. Der Sensor, welcher das Signal für die Kommutierungselektronik liefert, ist in der Regel an einer der beiden Stirnseiten des Rotors positioniert. Aufgrund konstruktiver Rahmenbedingungen besteht dabei meistens ein gewisser Abstand zwischen Rotor und Sensor. Damit die Position bzw. Rotationsgeschwindigkeit des Rotors zuverlässig erfasst werden kann, ist bei den meisten gattungsgemäßen Elektromotoren ein zusätzlicher Steuermagnet am Rotor angebracht, der das Magnetfeld erzeugt, welches vom Sensor abgetastet wird. Dieser Steuermagnet befindet sich vorteilhafter Weise direkt an einer der beiden Stirnseiten des Rotors. Das Vorsehen eines zusätzlichen Steuermagneten ist in der Regel mit erhöhten Kosten und zusätzlichem Fertigungsaufwand verbunden. Es gibt aber auch Elektromotoren, bei welchen das Rotormagnetfeld direkt abgetastet wird. Der Sensor muss dazu sehr nah am stirnseitigen Ende des Rotors positioniert werden, was aufgrund konstruktiver Rahmenbedingungen nicht immer leicht umzusetzen ist.

Ein elektronisch kommutierter Elektromotor nach dem Oberbegriff des unabhängigen Anspruchs 1 ist aus JP 2001186744 A bekannt. Weiterer verwandter Stand der Technik ist in EP 1670121 A1, US 2015/0318747 A1 und US 5325005 A beschrieben.

Aufgabe der vorliegenden Erfindung ist es, einen elektronisch kommutierten Elektromotor der eingangs genannten Art anzugeben, bei dem die Stellung des Rotors bzw. dessen Geschwindigkeit zuverlässig erfasst werden kann, wobei der elektronisch kommutierte Elektromotor einfach aufgebaut und kostengünstig zu fertigen sein soll. Die Erfindung soll sich insbesondere für Elektrokleinmotoren mit einem Außendurchmesser unter 60 mm eigenen.

Die Aufgabe wird gelöst durch die Merkmale des unabhängigen Anspruchs 1. Bei dem erfindungsgemäßen elektronisch kommutierten Elektromotor ist vorgesehen, dass der Rotor ferner einen zweiten weichmagnetischen Rotorkern aufweist, der in axialer Richtung des Rotors an den ersten weichmagnetischen Rotorkern anschließt, wobei in axialer Richtung zwischen dem ersten weichmagnetischen Rotorkern und dem zweiten weichmagnetischen Rotorkern ein unmagnetisches Trennelement angeordnet ist, wobei sich die Permanentmagneten in axialer Richtung über den ersten weichmagnetischen Rotorkern, das unmagnetische Trennelement und den zweiten weichmagnetischen Rotorkern erstrecken, und wobei das vom Sensor abgetastete Magnetfeld eine Steuermagnetfeld ist, das von den Permanentmagneten zusammen mit dem zweiten weichmagnetischen Rotorkern erzeugt wird.

Die erfindungsgemäße Lösung bietet vor allen Dingen den Vorteil, dass ein zuverlässig erfassbares Steuermagnetfeld erzeugt wird, ohne dass hierfür ein zusätzlicher Steuermagnet eingesetzt werden muss, welcher mit zusätzlichen Kosten und zusätzlichem Fertigungsaufwand verbunden wäre. Durch den zweiten weichmagnetischen Rotorkern kann das Steuermagnetfeld dabei auch bei größeren Abständen des Sensors zum ersten weichmagnetischen Rotorkern nahe an den Sensor heran gebracht werden. Der zweite weichmagnetische Rotorkern kann dabei in axialer Richtung vorteilhafter Weise über den weichmagnetischen Statorkern hinausstehen. Durch das unmagnetische Trennelement wird verhindert, dass durch die unsymmetrische Lage der gesamten Rotorgruppe, die dabei bezogen auf die axiale Richtung entsteht, in axialer Richtung auf den Rotor wirkende Kräfte erzeugt werden. Um eine zumindest annähernd bestehende räumliche Trennung zwischen dem Rotormagnetfeld und dem Steuermagnetfeld zu gewährleisten, beträgt die in axialer Richtung gemessene Dicke des unmagnetischen Trennelements erfindungsgemäß zumindest 10 % des Außendurchmessers des Rotors.

Die Permanentmagneten sind einteilig ausgeführt und nicht etwa in Abschnitte unterteilt. Sie erstrecken sich somit im wesentlichen über die gesamte Länge, die sich durch die Aneinanderreihung der beiden weichmagnetischen Rotorkerne und dem dazwischen liegenden unmagnetischen Trennelement ergibt. Die Permanentmagneten sind vorzugsweise in Ausnehmungen aufgenommen, die in den beiden Rotorkernen und dem Trennelement ausgebildet sind. Bei den Ausnehmungen kann es sich vorzugsweise um durchgehende Längsnuten in dem Außenumfang der betreffenden Bauteile handeln. Die Anordnung der Permanentmagneten ist vorzugsweise speichenförmig Die beiden Rotorkerne und das unmagnetische Trennelement haben weiter vorzugsweise im wesentlichen denselben Querschnitt. Weiter vorzugsweise handelt es sich bei dem Rotor um einen Innenläufer. Der erste weichmagnetische Rotorkern ist dabei radial innerhalb des Statorkerns angeordnet. Der Statorkern kann genutet ausgeführt sein, wobei die Spulen der Statorwicklung in den Nuten des Statorkerns aufgenommen sind. Alternativ kann der Statorkern auch durch einen außenliegenden magnetischen Rückschluss einer eisenlosen hohlzylindrischen und selbsttragenden Statorwicklung gebildet sein.

Weitere vorteilhafte Ausgestaltungen der vorliegenden Erfindung sind Gegenstand der Unteransprüche.

In einer besonders bevorzugten Ausführungsform der vorliegenden Erfindung ist der zweite weichmagnetische Rotorkern in axialer Richtung außerhalb des weichmagnetischen Statorkerns angeordnet. Dadurch wird zum einen gewährleistet, dass das Steuermagnetfeld nahe an den Sensor gebracht wird. Zum anderen wird dadurch eine Interaktion des Steuermagnetfelds mit dem Statormagnetfeld vermieden bzw. reduziert, sodass keine unerwünschten magnetisch erzeugten Kräfte generiert werden. Der erste weichmagnetische Rotorkern ist dabei vorzugsweise in axialer Richtung auf der gleichen Position angeordnet wie der weichmagnetische Statorkern. Ganz besonders bevorzugt haben der erste weichmagnetische Rotorkern und der weichmagnetische Statorkern die gleiche axiale Länge, sodass der erste weichmagnetische Rotorkern und der weichmagnetische Statorkern in axialer Richtung betrachtet deckungsgleich sind. Falls der erste weichmagnetische Rotorkern etwas kürzer oder länger als der weichmagnetische Statorkern ist, soll im Rahmen der vorliegenden Anmeldung unter der zuvor erwähnten gleichen Position in axialer Richtung verstanden werden, dass an beiden axialen Enden der gleiche Abstand oder Überstand des ersten weichmagnetischen Rotorkerns bezogen auf das jeweilige Stirnende des Statorkerns besteht.

In einer weiteren bevorzugten Ausführungsform der vorliegenden Erfindung schließt der zweite weichmagnetische Rotorkern in axialer Richtung im wesentlichen mit Wicklungsköpfen der Statorwicklung ab. Dadurch wird unter Beibehaltung einer möglichst kompakten Bauweise ein besonders zuverlässig abtastbares Steuermagnetfeld gewährleistet.

Gemäß einer weiteren besonders bevorzugten Ausführungsform der vorliegenden Erfindung ist das unmagnetische Trennelement eine Kunststoffscheibe. Dadurch kann das unmagnetische Trennelement besonders einfach und kostengünstig hergestellt werden.

Gemäß einer weiteren besonders bevorzugten Ausführungsform der vorliegenden Erfindung weisen der erste weichmagnetische Rotorkern, der zweite weichmagnetische Rotorkern und das unmagnetische Trennelement im Querschnitt im wesentlichen dieselbe Geometrie auf. Dadurch vereinfacht sich nicht nur die Montage. Auch die Herstellung der beiden weichmagnetischen Rotorkerne wird dadurch erheblich vereinfacht, da in beiden Fällen die gleichen Werkzeuge zum Einsatz kommen können.

Gemäß einer weiteren besonders bevorzugten Ausführungsform der vorliegenden Erfindung sind die Permanentmagneten in Nuten aufgenommen, die in dem ersten weichmagnetischen Rotorkern, dem zweiten weichmagnetischen Rotorkern und dem unmagnetischen Trennelement ausgebildet sind. Die Nuten sind dabei vorzugsweise durchgehend ausgebildet und erstrecken sich somit gleichermaßen durch alle drei der genannten Bauteile. Die Nuten sind einfach herstellbar und gewährleisten eine einfache Montage sowie einen zuverlässigen Sitz der Permanentmagneten. Alternativ können die Permanentmagneten auch in durchgehende Bohrungen eingesetzt werden, die sich ebenfalls über die beiden weichmagnetischen Rotorkerne und das dazwischen angeordnete unmagnetische Trennelement erstrecken. Weiter vorzugsweise ist in den beiden weichmagnetischen Rotorkernen und dem unmagnetischen Trennelement jeweils eine zentrale Bohrung zur Aufnahme einer Welle des Rotors ausgebildet.

Gemäß einer weiteren bevorzugten Ausführungsform der vorliegenden Erfindung sind der erste weichmagnetische Rotorkern und der zweite weichmagnetische Rotorkern jeweils aus weichmagnetischen, beidseitig isolierten, gestanzten und gestapelten Blechen zusammengesetzt. Die Bleche können mechanisch miteinander verknüpft, laserpaketiert oder klebpaketiert sein. Für den ersten weichmagnetischen Rotorkern und den zweiten weichmagnetischen Rotorkern können die gleichen Bleche verwendet werden, sodass sich die Herstellung des erfindungsgemä-ßen Elektromotors vereinfacht und daher besonders kostengünstig ist.

Gemäß einer weiteren bevorzugten Ausführungsform der vorliegenden Erfindung ist der Rotor 4-polig, 8-polig, 10-polig, 14-polig oder 16-polig ausgeführt.

Gemäß einer weiteren bevorzugten Ausführungsform der vorliegenden Erfindung sind die Permanentmagneten in tangentialer Richtung des Rotors magnetisiert.

Erfindungsgemäß ist der zumindest eine Sensor zur Abtastung des Steuermagnetfelds ein Hallsensor, wobei der Hallsensor auf einer in axialer Richtung zum zweiten weichmagnetischen Rotorkern weisenden Seite einer Leiterplatte angeordnet ist. Um die Genauigkeit der Abtastung zu erhöhen, können selbstverständlich auch mehrere Hallsensoren vorgesehen sein. Diese sind weiter vorzugsweise über den Umfang verteilt angeordnet.

Gemäß einer weiteren bevorzugten Ausführungsform der vorliegenden Erfindung ist der Elektromotor ein Elektrokleinmotoren mit einem Durchmesser unter 60 mm.

Die vorliegende Erfindung stellt auch ein Verfahren zur Herstellung des Rotors des erfindungsgemäßen elektronisch kommutierten Elektromotors bereit. Erfindungsgemäß weist der Rotor dabei eine Welle auf, auf die in einem ersten Schritt das mit einer zentrischen Durchgangsbohrung versehene unmagnetische Trennelement aufgeschoben wird. Anschließend werden der erste weichmagnetische Rotorkern und der zweite weichmagnetische Rotorkern ebenfalls mit entsprechenden zentrischen Durchgangsbohrungen auf die Welle aufgeschoben. In einem nächsten Schritt werden die Permanentmagneten in entsprechende Ausnehmungen des ersten und des zweiten weichmagnetischen Rotorkerns sowie des unmagnetischen Trennelements eingesetzt. Anschließend wird der Rotor mit einer anaeroben Vergussmasse oder mit einem Kleber vergossen. Das Verfahren gewährleistet eine einfache und kostengünstige Herstellung.

Ein Ausführungsbeispiel der vorliegenden Erfindung wird im folgenden anhand von Zeichnungen näher erläutert.

Es zeigen:
- Figur 1: einen Längsschnitt eines erfindungsgemäßen elektronisch kommutierten Elektromotors,
- Figur 2: den Rotor des erfindungsgemäßen elektronisch kommutierten Elektromotor aus Figur 1 in einer Schrägansicht,
- Figur 3: einen ersten Verfahrensschritt zur Herstellung des Rotors aus Figur 2, bei dem das unmagnetische Trennelement der Rotorbaugruppe auf die Welle des Rotors aufgeschoben wird.
- Figur 4: die Welle aus Figur 3 mit darauf positioniertem unmagnetischen Trennelement, und
- Figur 5: einen weiteren Verfahrensschritt zur Herstellung des Rotors aus Figur 2, bei dem der erste weichmagnetische Rotorkern und der zweite weichmagnetische Rotorkern auf die Welle aufgeschoben werden.

Für die folgenden Ausführungen gilt, dass gleiche Teile durch gleiche Bezugszeichen bezeichnet werden. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

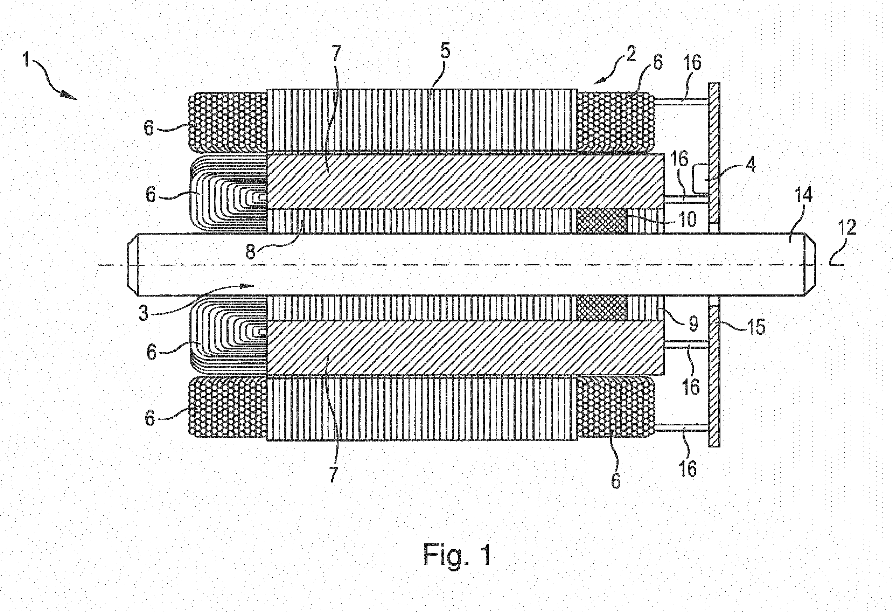

Figur 1 zeigt einen schematischen Längsschnitt durch einen erfindungsgemäßen elektronisch kommutierten Elektromotor 1. Der Elektromotor weist einen außenliegenden hohlzylindrischen Stator 2, einen als Innenläufer ausgebildeten Rotor 3 sowie einen Sensor 4 zur Erfassung der Drehposition bzw. Geschwindigkeit des Rotors auf. Bei dem Stator 2 handelt es sich um einen genuteten Stator. Dieser weist einen weichmagnetischen Statorkern 5 sowie mehrere in entsprechende Nuten des Statorkerns eingelegte Spulen auf. Die Spulen bilden zusammen die Statorwicklung des Stators. Von den Spulen sind in der Abbildung lediglich die Wicklungsköpfe 6 gezeigt. Die Spulen sind über Wicklungsanschlüsse 16 mit der Kommutierungselektronik verbunden. Diese ist auf einer Leiterplatte 15 untergebracht, die am rechten Ende des Rotors senkrecht zur Symmetrieachse 12 des Elektromotors angeordnet ist. Auf derjenigen Seite der Leiterplatte, die dem rechten Stirnende des Rotors zugewandt ist, befindet sich auch der Sensor 4 zur Erfassung der Drehstellung des Rotors. Bei dem Sensor handelt es sich um einen Hallsensor. An dieser Stelle wird nochmals darauf hingewiesen, dass zur Verbesserung der Abtastgenauigkeit selbstverständlich mehrere Sensoren vorgesehen sein können.

Die Zeichnungen sind lediglich schematischer Natur. Beispielsweise ist das Gehäuse des Elektromotors in Figur 1 nicht gezeigt.

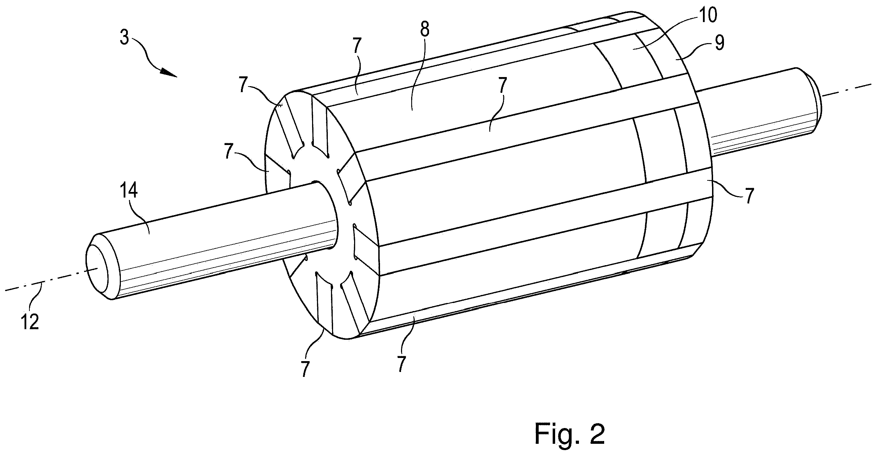

In Figur 2 ist der Rotor 3 des erfindungsgemäßen Elektromotors aus Figur 1 näher dargestellt. Er umfasst eine durchgehende Welle 14, einen ersten Rotorkern 8, einen zweiten Rotorkern 9, sowie mehrere über den Umfang verteilt angeordnete Permanentmagneten 7. Die Permanentmagneten 7 sind als Stabmagneten ausgeführt und in entsprechende Nuten eingesetzt, die am Außenumfang der beiden weichmagnetischen Rotorkerne ausgebildet sind und sich über die gesamte Länge der beiden weichmagnetischen Rotorkerne erstrecken. Die Permanentmagneten sind speichenförmig angeordnet und in tangentialer Richtung des Rotors magnetisiert. Zwischen dem ersten Rotorkern 8 und dem zweiten Rotorkern 9 ist ein unmagnetisches Trennelement 10 in Form einer Kunststoffscheibe angeordnet. Die beiden Rotorkerne sind durch das Trennelement gegeneinander isoliert. Sowohl die weichmagnetischen Rotorkerne 8 und 9 als auch das unmagnetische Trennelement weisen im wesentlichen denselben Querschnitt auf. Das bedeutet, auch das Trennelement 10 ist am Außenumfang mit entsprechenden Nuten versehen, in welchen die Permanentmagneten 7 aufgenommen sind.

Figur 1 zeigt, dass der erste weichmagnetische Rotorkern 8 dieselbe Länge aufweist wie der außenliegende weichmagnetische Statorkern 5. Der erste weichmagnetische Rotorkern 8 und der weichmagnetische Statorkern 5 sind zudem deckungsgleich angeordnet, sodass sie in axialer Richtung sowohl links als auch rechts auf gleicher Position abschließen. Die Permanentmagneten 7 erzeugen zusammen mit dem ersten weichmagnetischen Rotorkern 8 das Rotormagnetfeld, das zum Betrieb des Elektromotors mit dem durch die Statorwicklung und den Statorkern 5 erzeugten Statormagnetfeld des Stators zusammenwirkt. Ferner zeigt Figur 1, dass der zweite weichmagnetische Rotorkern 9 in axialer Richtung über das rechte Ende des weichmagnetischen Statorkerns 5 hinaussteht und im wesentlichen mit den Wicklungsköpfen 6 der Statorwicklung abschließt. Die Permanentmagneten 7 erzeugen zusammen mit dem zweiten weichmagnetischen Rotorkern 9 ein Steuermagnetfeld, das von dem Sensor 4 erfasst wird. Das unmagnetische Trennelement 10 sorgt dafür, dass das Steuermagnetfeld kaum mit dem Statormagnetfeld interagiert und somit keine unerwünschten Kräfte in axialer Richtung erzeugt werden.

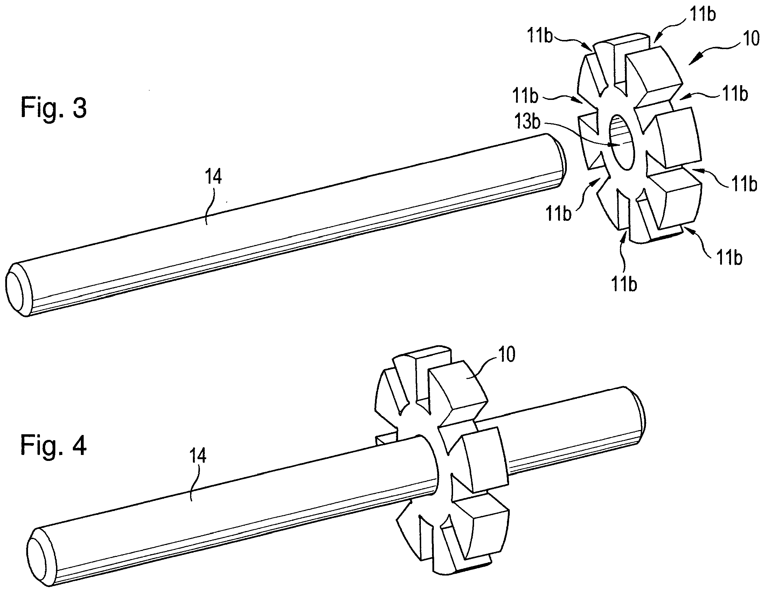

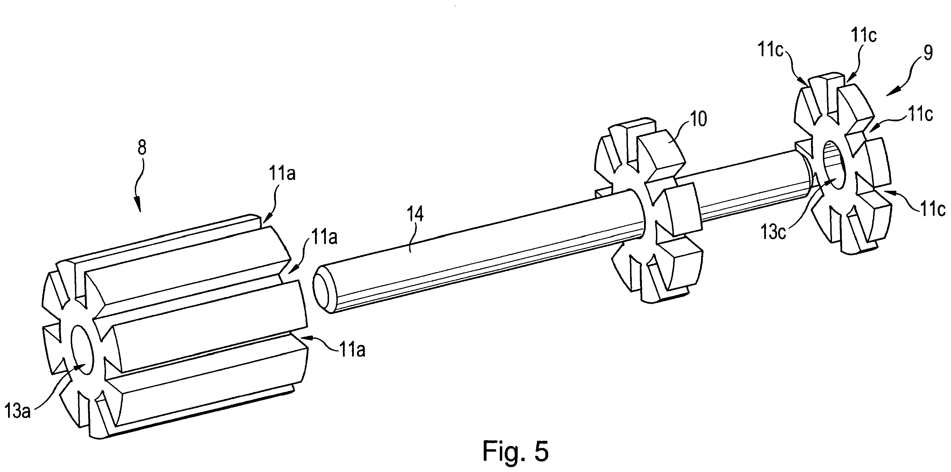

Im folgenden wird das Verfahren zur Herstellung des Rotors des erfindungsgemäßen Elektromotors anhand der Figuren 3 bis 5 erläutert. Wie Figur 3 zeigt, wird zuerst das unmagnetische Trennelement 10 auf die Welle 14 des Rotors aufgeschoben. Das Trennelement 10 weist hierzu eine durchgehende zentrale Bohrung 13b auf. Figur 4 zeigt die Welle 14 aus Figur 3 mit darauf positioniertem Trennelement 10. In einem nächsten Schritt werden der erste weichmagnetische Rotorkern 8 und der zweite weichmagnetische Rotorkern 9 auf die beiden Enden der Rotorwelle aufgeschoben. Die beiden weichmagnetischen Rotorkerne weisen hierfür ebenfalls jeweils eine zentrische Durchgangsbohrung 13a bzw. 13c auf. Wie aus den Figuren 3 und 5 hervorgeht, weisen sowohl die beiden weichmagnetischen Rotorkerne 8 und 9 als auch das unmagnetische Trennelement 10 Nuten 11a, 11b, 11c auf, die in axialer Richtung nahtlos ineinander übergehen. In diese Nuten werden schließlich die länglichen Permanentmagneten 7 eingesetzt, wie es Figur 2 bereits zeigt. Die Rotorbaugruppe wird anschließend mit einer anaeroben Vergussmasse oder mit einem Kleber vergossen.

## Patentansprüche

1. Elektronisch kommutierter Elektromotor (1) mit einem Stator (2), einem gegenüber dem Stator drehbar gelagerten Rotor (3), und mit zumindest einem Sensor (4) zur Abtastung eines mit dem Rotor mitdrehenden Magnetfelds, wobei der Stator eine Statorwicklung und einen weichmagnetischen Statorkern (5) aufweist, wobei der Rotor mehrere in Umfangsrichtung des Rotors verteilt angeordnete Permanentmagneten (7) und einen ersten weichmagnetischen Rotorkern (8) für die Permanentmagneten aufweist, und wobei die Permanentmagneten (7) zusammen mit dem ersten weichmagnetischen Rotorkern ein Rotormagnetfeld erzeugen, das zum Betrieb des Elektromotors mit einem durch Statorwicklung und Statorkern erzeugten Statormagnetfeld des Stators zusammenwirkt, wobei der Rotor ferner einen zweiten weichmagnetischen Rotorkern (9) aufweist, der in axialer Richtung des Rotors an den ersten weichmagnetischen Rotorkern (8) anschließt, wobei in axialer Richtung zwischen dem ersten weichmagnetischen Rotorkern und dem zweiten weichmagnetischen Rotorkern ein unmagnetisches Trennelement (10) angeordnet ist, wobei sich die Permanentmagneten (7) in axialer Richtung über den ersten weichmagnetischen Rotorkern (8), das unmagnetische Trennelement (10) und den zweiten weichmagnetischen Rotorkern (9) erstrecken, und wobei das vom Sensor (4) abgetastete Magnetfeld ein Steuermagnetfeld ist, das von den Permanentmagneten zusammen mit dem zweiten weichmagnetischen Rotorkern erzeugt wird, **dadurch gekennzeichnet, dass** die in axialer Richtung gemessene Dicke des unmagnetischen Trennelements (10) zumindest 10 % des Außendurchmessers des Rotors (3) beträgt, wobei der zumindest eine Sensor (4) zur Abtastung des Steuermagnetfelds ein Hallsensor ist, und wobei der Hallsensor auf einer in axialer Richtung zum zweiten weichmagnetischen Rotorkern (9) weisenden Seite einer Leiterplatte (15) angeordnet ist.

2. Elektronisch kommutierter Elektromotor (1) nach Anspruch 1, **dadurch gekennzeichnet, dass** der zweite weichmagnetische Rotorkern (9) in axialer Richtung außerhalb des weichmagnetischen Statorkerns (5) angeordnet ist.

3. Elektronisch kommutierter Elektromotor (1) nach Anspruch 2, **dadurch gekennzeichnet, dass** der erste weichmagnetische Rotorkern (8) in axialer Richtung auf der gleichen Position angeordnet ist wie der weichmagnetische Statorkern (5).

4. Elektronisch kommutierter Elektromotor (1) nach Anspruch 3, **dadurch gekennzeichnet, dass** der erste weichmagnetische Rotorkern (8) und der weichmagnetische Statorkern (5) die gleiche axiale Länge haben.

5. Elektronisch kommutierter Elektromotor (1) nach einem der Ansprüche 2 bis 4, **dadurch gekennzeichnet, dass** der zweite weichmagnetische Rotorkern (9) in axialer Richtung im Wesentlichen mit Wicklungsköpfen (6) der Statorwicklung abschließt.

6. Elektronisch kommutierter Elektromotor (1) nach einem der Ansprüche 1 bis 5, **dadurch gekennzeichnet, dass** das unmagnetische Trennelement (10) eine Kunststoffscheibe ist.

7. Elektronisch kommutierter Elektromotor (1) nach einem der Ansprüche 1 bis 6, **dadurch gekennzeichnet, dass** der erste weichmagnetische Rotorkern (8), der zweite weichmagnetische Rotorkern (9) und das unmagnetische Trennelement (10) im Querschnitt im Wesentlichen dieselbe Geometrie aufweisen.

8. Elektronisch kommutierter Elektromotor (1) nach einem der Ansprüche 1 bis 7, **dadurch gekennzeichnet, dass** die Permanentmagneten (7) in Nuten (11a, 11b, 11c) aufgenommen sind, die in dem ersten weichmagnetischen Rotorkern (8), dem zweiten weichmagnetischen Rotorkern (9) und dem unmagnetischen Trennelement (10) ausgebildet sind.

9. Elektronisch kommutierter Elektromotor (1) nach einem der Ansprüche 1 bis 8, **dadurch gekennzeichnet, dass** der erste weichmagnetische Rotorkern (8) und der zweite weichmagnetische Rotorkern (9) jeweils aus weichmagnetischen, beidseitig isolierten, gestanzten und gestapelten Blechen zusammengesetzt sind.

10. Elektronisch kommutierter Elektromotor (1) nach einem der Ansprüche 1 bis 9, **dadurch gekennzeichnet, dass** der Rotor (3) 4-polig, 8-polig, 10-polig, 14-polig oder 16-polig ausgeführt ist.

11. Elektronisch kommutierter Elektromotor (1) nach einem der Ansprüche 1 bis 10, **dadurch gekennzeichnet, dass** die Permanentmagneten (7) in tangentialer Richtung des Rotors (3) magnetisiert sind.

12. Elektronisch kommutierter Elektromotor (1) nach einem der Ansprüche 1 bis 11, **dadurch gekennzeichnet, dass** der Elektromotor (1) ein Elektrokleinmotor mit einem Durchmesser unter 60 mm ist.

13. Verfahren zur Herstellung eines Rotors (3) für einen elektronisch kommutierten Elektromotor (1) nach einem der Ansprüche 1 bis 12, wobei der Rotor (3) eine Welle (14) aufweist, auf die in einem ersten Schritt das mit einer zentrischen Durchgangsbohrung (13b) versehene, unmagnetische Trennelement (10), das eine in axialer Richtung gemessene Dicke von zumindest 10% des Außendurchmessers des Rotors (3) umfasst, aufgeschoben wird, wobei anschließend der erste weichmagnetische Rotorkern (8) und der zweite weichmagnetische Rotorkern (9) ebenfalls mit entsprechenden zentrischen Durchgangsbohrungen (13a, 13c) auf die Welle aufgeschoben werden, wobei in einem nächsten Schritt die Permanentmagneten (7) in entsprechende Ausnehmungen (11a, 11b, 11c) des ersten und des zweiten weichmagnetischen Rotorkerns (8, 9) sowie des unmagnetischen Trennelements (10) eingesetzt werden, und wobei der Rotor (3) anschließend mit einer anaeroben Vergussmasse oder mit einem Kleber vergossen wird.

## Claims

1. Electronically commutated electric motor (1) with a stator, a rotor (3) rotatably mounted relative to said stator, and at least one sensor (4) for scanning a magnetic field that co-rotates with said rotor, where said stator comprises a stator winding and a magnetically soft stator core (5), where said rotor comprises several permanent magnets (7) arranged distributed in the circumferential direction of said rotor as well as a first magnetically soft rotor core (8) for said permanent magnets, and where said permanent magnets (7), together with said first magnetically soft rotor core, generate a rotor magnetic field which, for operating said electric motor, interacts with the stator magnetic field of said stator generated by said stator winding and said stator core, wherein said rotor further comprises a second magnetically soft rotor core (9) which adjoins said first magnetically soft rotor core (8) in the axial direction of said rotor, where a non-magnetic separator element (10) is arranged in the axial direction between said first magnetically soft rotor core and said second magnetically soft rotor core, where said permanent magnets (7) extend in the axial direction over said first magnetically soft rotor core (8), said non-magnetic separator element (10) and said second magnetically soft rotor core (9), and where the magnetic field scanned by said sensor (4) is a control magnetic field generated by said permanent magnets together with said second magnetically soft rotor core, **characterized in that** the thickness of the non-magnetic separator element (10) measured in the axial direction is at least 10% of the outer diameter of the rotor (3), wherein said at least one sensor (4) for scanning the control magnetic field is a Hall sensor, and wherein said Hall sensor is arranged on a side of a printed circuit board (15) facing said second magnetically soft rotor core (9) in the axial direction.

2. Electronically commutated electric motor (1) according to claim 1, **characterized in that** said second magnetically soft rotor core (9) is arranged in the axial direction outside said magnetically soft stator core (5).

3. Electronically commutated electric motor (1) according to claim 2, **characterized in that** said first magnetically soft rotor core (8) is arranged in the axial direction at the same position as said magnetically soft stator core (5).

4. Electronically commutated electric motor (1) according to claim 3, **characterized in that** said first magnetically soft rotor core (8) and said magnetically soft stator core (5) have the same axial length.

5. Electronically commutated electric motor (1) according to one of the claims 2 to 4, **characterized in that** said second magnetically soft rotor core (9) terminates substantially with winding heads (6) of said stator winding in the axial direction.

6. Electronically commutated electric motor (1) according to one of the claims 1 to 5, **characterized in that** said non-magnetic separator element (10) is a plastic disk.

7. Electronically commutated electric motor (1) according to one of the claims 1 to 6, **characterized in that** said first magnetically soft rotor core (8), said second magnetically soft rotor core (9), and said non-magnetic separator element (10) exhibit substantially the same crosssectional geometry.

8. Electronically commutated electric motor (1) according to one of the claims 1 to 7, **characterized in that** said permanent magnets (7) are received in grooves (11a, 11b, 11c) formed in said first magnetically soft rotor core (8), said second magnetically soft rotor core (9), and said non-magnetic separator element (10).

9. Electronically commutated electric motor (1) according to one of the claims 1 to 8, **characterized in that** said first magnetically soft rotor core (8) and said second magnetically soft rotor core (9) are each composed of magnetically soft, punched and stacked metal sheets insulated on both sides.

10. Electronically commutated electric motor (1) according to one of the claims 1 to 9, **characterized in that** said rotor (3) has a 4-pole, 8-pole, 10-pole, 14-pole or 16-pole design.

11. Electronically commutated electric motor (1) according to one of the claims 1 to 10, **characterized in that** said permanent magnets (7) are magnetized in the tangential direction of said rotor (3).

12. Electronically commutated electric motor (1) according to one of the claims 1 to 11, **characterized in that** said electric motor (1) is a small electric motor having a diameter of less than 60 mm.

13. Method for manufacturing a rotor (3) for an electronically commutated electric motor (1) according to one of the claims 1 to 12, where said rotor (3) comprises a shaft (14) onto which, in a first step, said non-magnetic separator element (10) which is provided with a center throughbore (13b) and which comprises a thickness measured in the axial direction of at least 10% of the outer diameter of the rotor (3) is slipped, where subsequently, said first magnetically soft rotor core (8) and said second magnetically soft rotor core (9), also having corresponding center through-bores (13a, 13c), are slipped onto said shaft, where in a next step, said permanent magnets (7) are inserted into corresponding recesses (11a, 11b, 11c) of said first and said second magnetically soft rotor cores (8, 9) and of said non-magnetic separator element (10), and where said rotor (3) is then cast with an anaerobic potting compound or with adhesive.

## Revendications

1. Moteur électrique à commutation électronique (1) comprenant un stator (2), un rotor (3) monté rotatif par rapport au stator, et au moins un capteur (4) pour balayer un champ magnétique tournant avec le rotor, dans lequel le stator présente un enroulement de stator et un noyau de stator magnétique doux (5), dans lequel le rotor présente plusieurs aimants permanents (7) répartis de manière régulière dans la direction périphérique du rotor et un premier noyau de rotor (8) magnétique doux pour les aimants permanents, et dans lequel les aimants permanents (7) génèrent, conjointement avec le premier noyau de rotor magnétique doux, un champ magnétique de rotor qui, pour faire fonctionner le moteur électrique, coopère avec un champ magnétique de stator du stator généré par un enroulement de stator et un noyau de stator, dans lequel le rotor comprend en outre un second noyau de rotor magnétique doux (9) qui se raccorde au premier noyau de rotor magnétique doux (8) dans la direction axiale du rotor, dans lequel un élément de séparation non magnétique (10) est agencé dans la direction axiale entre le premier noyau de rotor magnétique doux et le second noyau de rotor magnétique doux, dans lequel les aimants permanents (7) s'étendent dans la direction axiale sur le premier noyau de rotor magnétique doux (8), l'élément de séparation non magnétique (10) et le second noyau de rotor magnétique doux (9), et dans lequel le champ magnétique balayé par le capteur (4) est un champ magnétique de commande qui est généré par les aimants permanents conjointement avec le second noyau de rotor magnétique doux, **caractérisé en ce que** l'épaisseur de l'élément de séparation non magnétique (10) mesurée dans la direction axiale correspond à au moins 10 % du diamètre extérieur du rotor (3), dans lequel le au moins un capteur (4) pour balayer le champ magnétique de commande est un capteur à effet Hall, et dans lequel le capteur à effet Hall est agencé sur un côté d'une carte de circuit imprimé (15) orienté dans la direction axiale par rapport au second noyau de rotor magnétique doux (9).

2. Moteur électrique à commutation électronique (1) selon la revendication 1, **caractérisé en ce que** le second noyau de rotor magnétique doux (9) est agencé dans la direction axiale à l'extérieur du noyau de stator magnétique doux (5).

3. Moteur électrique à commutation électronique (1) selon la revendication 2, **caractérisé en ce que** le premier noyau de rotor magnétique doux (8) est agencé dans la direction axiale dans la même position que le noyau de stator magnétique doux (5).

4. Moteur électrique à commutation électronique (1) selon la revendication 3, **caractérisé en ce que** le premier noyau de rotor magnétique doux (8) et le noyau de stator magnétique doux (5) ont la même longueur axiale.

5. Moteur électrique à commutation électronique (1) selon l'une quelconque des revendications 2 à 4, **caractérisé en ce que** le second noyau de rotor magnétique doux (9) se termine dans la direction axiale sensiblement avec des têtes d'enroulement (6) de l'enroulement de stator.

6. Moteur électrique à commutation électronique (1) selon l'une quelconque des revendications 1 à 5, **caractérisé en ce que** l'élément de séparation non magnétique (1) est un disque en plastique.

7. Moteur électrique à commutation électronique (1) selon l'une quelconque des revendications 1 à 6, **caractérisé en ce que** le premier noyau de rotor magnétique doux (8), le second noyau de rotor magnétique doux (9) et l'élément de séparation non magnétique (10) présentent en section transversale sensiblement la même géométrie.

8. Moteur électrique à commutation électronique (1) selon l'une quelconque des revendications 1 à 7, **caractérisé en ce que** les aimants permanents (7) sont logés dans des rainures (11a, 11b, 11c) qui sont formées dans le premier noyau de rotor magnétique doux (8), le second noyau de rotor magnétique doux (9) et l'élément de séparation non magnétique (10).

9. Moteur électrique à commutation électronique (1) selon l'une quelconque des revendications 1 à 8, **caractérisé en ce que** le premier noyau de rotor magnétique doux (8) et le second noyau de rotor magnétique doux (9) sont composés respectivement de tôles magnétiques douces, isolées des deux côtés, estampées et empilées.

10. Moteur électrique à commutation électronique (1) selon l'une quelconque des revendications 1 à 9, **caractérisé en ce que** le rotor (3) est réalisé à 4 pôles, 8 pôles, 10 pôles, 14 pôles ou 16 pôles.

11. Moteur électrique à commutation électronique (1) selon l'une quelconque des revendications 1 à 10, **caractérisé en ce que** les aimants permanents (7) sont magnétisés dans la direction tangentielle du rotor (3).

12. Moteur électrique à commutation électronique (1) selon l'une quelconque des revendications 1 à 11, **caractérisé en ce que** le moteur électrique (1) est un petit moteur électrique avec un diamètre inférieur à 60 mm.

13. Procédé de fabrication d'un rotor (3) pour un moteur électrique à commutation électronique (1) selon l'une quelconque des revendications 1 à 12, dans lequel le rotor (3) présente un arbre (14) sur lequel, dans une première étape, l'élément de séparation non magnétique (10) muni d'un alésage traversant central (13b), qui présente une épaisseur mesurée dans la direction axiale d'au moins 10 % du diamètre extérieur du rotor (3), est enfilé, dans lequel ensuite le premier noyau de rotor magnétique doux (8) et le second noyau de rotor magnétique doux (9) sont également enfilés sur l'arbre avec des alésages traversants centraux correspondants (13a, 13c), dans lequel, dans une étape suivante, les aimants permanents (7) sont insérés dans des évidements correspondants (11a, 11b, 11c) des premier et second noyaux de rotor magnétique doux (8, 9) ainsi que de l'élément de séparation non magnétique (10), et dans lequel le rotor (3) est ensuite scellé avec une masse de scellement anaérobique ou ave une colle.
